# FASCICULE DE BREVET EUROPEEN

(11) **EP 0 936 711 B1**
(45) Date de publication et mention de la délivrance du brevet: **16.10.2002**
(21) Numéro de dépôt: 99400283.0
(22) Date de dépôt: 08.02.1999
(51) Int. Cl.: H02B 1/42

(54) **Enveloppe, en particulier coffret, notamment pour matériel électrique**
Verkapselung, insbesondere Kasten für elektrische Geräte
Casing for electrical equipment

(30) Priorité: 11.02.1998 FR 9801626
(43) Date de publication de la demande: 18.08.1999
(73) Titulaire: LEGRAND, F-87000 Limoges (FR); LEGRAND SNC, F-87000 Limoges (FR)
(72) Inventeur: Leneutre, Pascal, 76520 Fresne-le-Plan (FR)
(74) Mandataire: CABINET BONNET-THIRION

(56) Documents cités:
- EP-A- 0 010 291
- EP-A- 0 192 519
- EP-A- 0 762 586
- WO-A-93/10692
- FR-A- 2 744 847

## Description

La présente invention concerne d'une manière générale les enveloppes du type de celles qui sont par exemple mises en oeuvre pour le logement et la protection d'un quelconque matériel électrique.

Elle vise plus particulièrement, mais non nécessairement exclusivement, celles de ces enveloppes qui, destinées à être rapportées sur un quelconque support, par exemple un mur, sans appui sur le sol, sont communément appelées coffrets.

La présente invention vise plus précisément, encore, celles de ces enveloppes qui, indépendamment d'une éventuelle porte, comportent globalement, d'une part, une ceinture, qui forme leur paroi supérieure, leur paroi inférieure et leurs parois latérales, et dont est solidaire, le long de leur bord arrière, un cadre, dit ci-après par simple commodité cadre d'appui, et, d'autre part, un fond, qui est appliqué, préférentiellement à étanchéité, contre le cadre d'appui, sur la face extérieure de celui-ci, et des moyens de montage d'un équipement.

Lorsque l'ensemble est réalisé en métal, le fond est usuellement rapporté par soudage sur le cadre d'appui prévu pour lui à l'arrière de la ceinture.

La raison en est que la liaison correspondante doit être suffisamment ferme pour permettre de reporter sur le fond les efforts dus à la ceinture et à la porte dont celle-ci est éventuellement équipée.

En outre, la fixation de l'ensemble à un support se fait usuellement par le fond, et c'est donc celui-ci qui porte directement, par exemple sous la forme de goujons qui lui sont également rapportés par soudage, les moyens de support propres à la fixation d'un équipement.

Ces dispositions, suivant lesquelles le fond constitue ainsi de fait la pièce maîtresse de l'ensemble, la ceinture ne constituant corollairement qu'un habillage porté par ce fond, ont donné, et peuvent encore donner satisfaction

Elles présentent cependant l'inconvénient que la peinture d'une enveloppe ainsi réalisée ne peut intervenir qu'après son assemblage, c'est-à-dire qu'après que le fond ait été dûment rapporté par soudage sur le cadre d'appui de la ceinture.

II en résulte, notamment, que, pour affecter de manière satisfaisante les zones d'angle de la ceinture, notamment au voisinage du fond, cette peinture doit nécessairement, et de manière relativement coûteuse, être effectuée au trempé, en associant éventuellement à ce trempé un certain poudrage électrostatique.

Le bain correspondant ne manque pas de soulever des problèmes d'environnement et de pollution, et ceux-ci sont fréquemment difficiles et coûteux à surmonter.

En outre, avant l'opération de peinture, il faut rapporter, de manière relativement dispendieuse, sur les goujons portés par le fond, des caches, pour que ces goujons restent au moins en partie nus et qu'ils puissent ainsi ensuite être à même d'assurer la fonction de continuité électrique usuellement requise dans une enveloppe contenant du matériel électrique.

Le document DE-A-2013385 propose une enveloppe du type précité, comportant de plus à l'intérieur de la ceinture, dans chacune des zones d'angle de celle-ci, une pièce de coin, à laquelle le fond se trouve assujetti par un moyen de fixation de telle sorte que le cadre d'appui se trouve pris en sandwich entre le fond et la pièce de coin.

Les pièces de coin ainsi prévues participant à l'assemblage de l'ensemble, puisque c'est par leur intermédiaire que se fait la fixation du fond au cadre d'appui de la ceinture, il est avantageusement possible de peindre le fond et la ceinture avant cet assemblage.

L'opération correspondante peut donc avantageusement se faire autrement qu'au trempé, et, par exemple, de manière électrostatique, en évitant ainsi avantageusement les inconvénients d'une peinture au trempé.

Cependant, le problème relatif aux moyens de support propres à la fixation d'un équipement reste entier. Ces moyens sont en effet réalisés sous la forme de cornières verticales rapportées par soudage sur la ceinture, si bien qu'il se pose les problèmes de peinture et de continuité électrique évoqués ci-dessus.

De plus, et surtout, la liaison du fond avec la ceinture, qui est exclusivement assurée par les pièces de coin, peut s'avérer insuffisamment rigide pour permettre la fixation de l'ensemble de l'enveloppe par son fond à un quelconque support.

Le document EP-A-0 338 338 propose une enveloppe d'un type différent de celles décrites ci-dessus, puisque le fond n'est pas rapporté mais fait partie intégrante de l'enveloppe. Les problèmes précités ne se posent donc pas.

Afin de résoudre les inconvénients précités de l'état de la technique, l'invention propose une enveloppe présentant les caractéristiques de la revendication 1.

Ainsi, les pièces de coin suivant l'invention participent avantageusement à cette fixation, en sorte que, par leur intermédiaire, la ceinture constitue la pièce maîtresse de l'ensemble.

En outre, les pièces de coin suivant l'invention comportant par elles-mêmes les moyens de support propres à la fixation d'un équipement, le fond est avantageusement épargné de la présence de tout goujon, ce qui évite d'avoir à rapporter des caches sur de tels goujons avant qu'il soit procédé à sa peinture.

Préférentiellement, suivant un développement de l'invention, les moyens de fixation par lesquels le fond est assujetti aux pièces de coin suivant l'invention traversent également le cadre d'appui de la ceinture.

Il en résulte que, par l'intermédiaire de ce cadre d'appui, les pièces de coin suivant l'invention sont solidaires de la ceinture, tout se passant dès lors comme si elles appartenaient à celle-ci.

Les caractéristiques et avantages de l'invention ressortiront d'ailleurs de la description qui va suivre, à titre d'exemple, en référence aux dessins schématiques annexés sur lesquels :
la figure 1 est une vue en perspective d'une enveloppe suivant l'invention ;
la figure 2 reprend, à échelle supérieure, le détail de la figure 1 repéré par un encart II sur cette figure 1 ;
la figure 3 est, à échelle différente, une vue partielle en perspective de l'enveloppe suivant l'invention, vue de l'arrière, suivant la flèche III de la figure 2 ;
la figure 4 est, déduite de la figure 3, une vue partielle en perspective éclatée de cette enveloppe, vue de l'arrière ;
la figure 5 est, à échelle supérieure, une vue en perspective d'une des pièces de coin équipant l'enveloppe suivant l'invention ;
les figures 6 et 7 sont, à échelle encore supérieure, des vues partielle en coupe de cette pièce de coin, suivant, chacune respectivement, les lignes VI-VI et VII-VII de la figure 5 ;
la figure 8 est, à échelle différente, une vue partielle en coupe du fond de l'enveloppe suivant l'invention, suivant la ligne VIII-VIII de la figure 4 ;
la figure 9 est, avec un arrachement local, une vue partielle en perspective de l'enveloppe suivant l'invention, pour un premier mode de fixation de celle-ci ;
la figure 10 est une vue partielle en perspective analogue à celle de la figure 9, pour un deuxième mode de fixation de l'enveloppe suivant l'invention ;
la figure 11 est une vue partielle en perspective de l'enveloppe suivant l'invention, qui, se rapportant à l'intérieur de cette enveloppe, illustre la mise en place d'un premier type d'équipement dans celle-ci ;
les figures 12, 13 et 14 sont des vues partielles en perspective, qui, analogues à celle de la figure 11, se rapportent chacune respectivement à d'autres types d'équipement.

Ces figures illustrent à titre d'exemple l'application de l'invention au cas où l'enveloppe 10 concernée est un coffret à fixer à un quelconque support, non représenté, qui peut, par exemple, être un simple mur.

Cette enveloppe 10, qui a un contour globalement parallélépipédique, comporte, globalement, d'une part, une ceinture 11, qui forme sa paroi supérieure 12, sa paroi inférieure 13 et ses parois latérales 14, et dont est solidaire, le long de son bord arrière 15, suivant des modalités décrites plus en détail ultérieurement, un cadre 16, dit ici par simple commodité cadre d'appui, et, d'autre part, un fond 18, qui est appliqué contre le cadre d'appui 16, sur la face extérieure 19 de celui-ci, et auquel sont associés, à l'intérieur de la ceinture 11, et suivant des modalités qui seront également décrites plus en détail ci-après, des moyens de support 20 propres à la fixation d'un quelconque équipement.

L'enveloppe 10 ne relève pas, par elle-même, de la présente invention, et elle ne sera donc pas décrite dans tous ses détails ici.

Seuls en seront décrits les éléments nécessaires à la compréhension de l'invention.

Il suffira d'indiquer à ce sujet que, dans la forme de réalisation représentée, le cadre d'appui 16 de la ceinture 11 est d'un seul tenant avec cette ceinture 11, ce cadre d'appui 16 étant formé par des retours en équerre des parois 12, 13, 14 constituant cette dernière.

Par exemple, pour celle des zones d'angle A de la ceinture 11 qui est plus particulièrement visible sur les figures, et qui est en pratique sa zone d'angle inférieure gauche, le cadre d'appui 16 est formé par un retour en équerre 13' de la paroi inférieure 13 de cette ceinture 11 et par un retour en équerre 14' de la paroi latérale 14 correspondante de celle-ci.

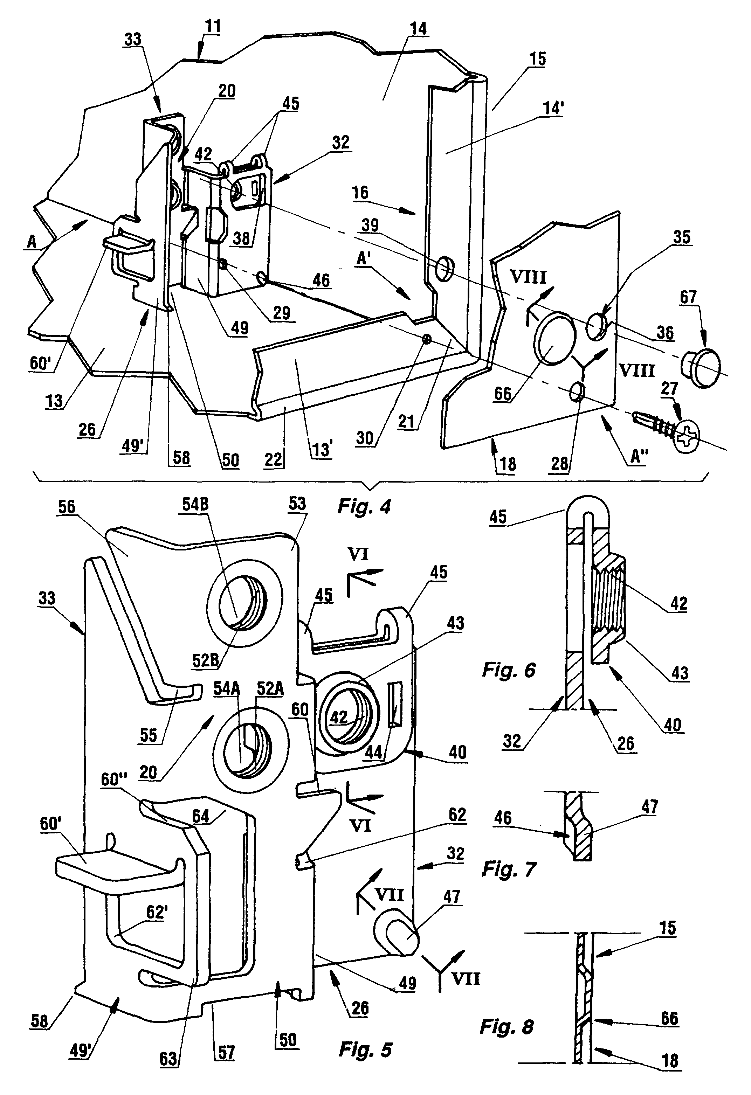

Ainsi qu'il est visible sur la figure 4, ces retours en équerre 13', 14' sont aboutés l'un à l'autre à leur extrémité par une ligne de coupe 21 à 45°.

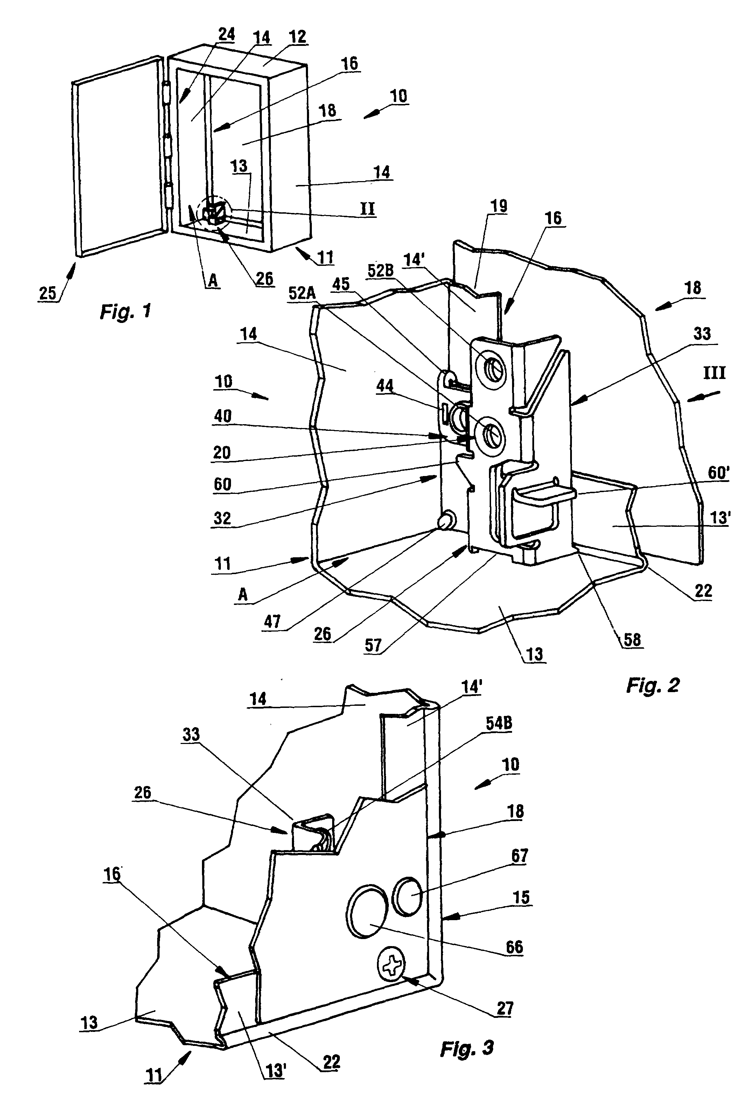

Dans la forme de réalisation représentée, et ainsi qu'il est mieux visible sur les figures 3 et 4, le cadre d'appui 16 s'étend en retrait par rapport au bord arrière 15 de la ceinture 11, et il se raccorde à celle-ci par un repli 22.

Grâce à un tel repli 22, le fond 18 est totalement encastré dans la ceinture 11.

Par exemple, et tel que représenté, les flancs du repli 22 ne sont pas jointifs, l'un d'eux étant dans le prolongement de la paroi 12, 13, 14 correspondante de la ceinture 11, tandis que l'autre s'écarte progressivement de cette paroi 12, 13, 14.

La ceinture 11 et le cadre d'appui 16 ainsi constitués peuvent par exemple résulter en commun de la découpe et du pliage d'un seul et même flan métallique, la ceinture 11 étant alors refermée en boucle sur elle-même, et de préférence à étanchéité, par exemple par soudage, le long de l'arête de l'une de ses zones d'angle A.

Dans la forme de réalisation représentée, la ceinture 11 forme, également, à l'avant, sensiblement parallèlement au cadre d'appui 16 présent à l'arrière, un cadre de dormant 24, et l'enveloppe 10 se complète par une porte 25, qui, en position de fermeture, vient s'appliquer, de préférence à étanchéité, contre ce cadre de dormant 24.

Suivant l'invention, l'enveloppe 10 comporte, à l'intérieur de la ceinture 11, dans chacune des zones d'angle A de celle-ci, une pièce de coin 26, à laquelle le fond 18 se trouve assujetti par au moins un moyen de fixation 27, et qui comporte, par elle-même, les moyens de support 20 propres à la fixation d'un équipement.

Préférentiellement, et cela est le cas dans la forme de réalisation représentée, le moyen de fixation 27 associé à la pièce de coin 26 intervient de l'arrière, figure 4, et, après traversée du fond 18 à la faveur d'un trou 28 prévu à cet effet dans celui-ci, il est en prise avec cette pièce de coin 26.

Par exemple, et tel que représenté, ce moyen de fixation 27 est une vis autotaraudeuse, qui traverse librement le fond 18, et qui mord dans la pièce de coin 26.

Dans la forme de réalisation représentée, ce moyen de fixation 27 traverse également le cadre d'appui 16, en mordant au passage sur celui-ci.

Par exemple, et tel que représenté, pour l'intervention du moyen de fixation 27, un avant-trou 29 est prévu sur la pièce de coin 26, et, de même, un avant-trou 30 est prévu sur le cadre d'appui 16.

Bien entendu, ces avant-trous 29, 30 sont alignés avec le trou 28 du fond 18.

Dans la forme de réalisation représentée, seul un moyen de fixation 27 est prévu pour chacune des zones d'angle A de la ceinture 11.

Dans la forme de réalisation représentée, la pièce de coin 26 suivant l'invention comporte, côte à côte, d'une part, dans la zone d'angle A correspondante de la ceinture 11, un flasque 32, qui s'étend au plus près du cadre d'appui 16, et à la faveur duquel intervient le moyen de fixation 27 associé, et, d'autre part, sensiblement parallèlement à la paroi latérale 14 correspondante de la ceinture 11, un montant 33, qui fait saillie sur le cadre d'appui 16, et à la faveur duquel interviennent les moyens de support 20 propres à la fixation d'un équipement.

L'avant-trou 29 affecte donc le flasque 32.

Par exemple, et tel que représenté, il s'étend en bordure du montant 33.

De manière connue en soi, il est prévu, dans chacune des zones d'angle A de la ceinture 11, pour la fixation de l'ensemble au support sur lequel l'enveloppe 10 doit être rapportée, au moins un perçage de fixation 35.

Suivant l'invention, ce perçage de fixation 35 fait intervenir la pièce de coin 26 correspondante.

Plus précisément, ce perçage de fixation 35 comporte, sur le fond 18, un trou 36, et, sur le flasque 32 de la pièce de coin 26, un évidement 38 établi au droit du trou 36 du fond 18.

Préférentiellement, et cela est le cas dans la forme de réalisation représentée, le perçage de fixation 35 fait aussi intervenir le cadre d'appui 16, ce perçage de fixation 35 comportant, sur ce cadre d'appui 16, un trou 39 établi au droit du trou 36 du fond 18.

Par exemple, et tel que représenté, le trou 36 du fond 18 a un contour circulaire, et il en est de même du trou 39 du cadre d'appui 16.

Il peut en être de même pour l'évidement 38 du flasque 32 de la pièce de coin 26.

Cependant, dans la forme de réalisation représentée, cet évidement 38 s'étale en longueur sur la largeur du flasque 32, et, s'il a, globalement, un contour rectangulaire, celui de ses bords latéraux qui est le plus proche du montant 33 est arrondi en demi-cercle.

Dans la forme de réalisation représentée, et pour des raisons qui apparaîtront ultérieurement, le flasque 32 de la pièce de coin 26 se prolonge par une patte 40, qui, repliée en U parallèlement à lui, du côté de sa face avant, présente, au droit de son évidement 38, un perçage taraudé 42.

Préférentiellement, et cela est le cas dans la forme de réalisation représentée, ce perçage taraudé 42 se prolonge axialement à la faveur d'un soyage 43, et celui-ci fait saillie sur la face avant de la patte 40.

Dans la forme de réalisation représentée, la patte 40 est également ajourée par une boutonnière 44, qui s'étend parallèlement à ses bords latéraux, dans l'emprise de l'évidement 38 du flasque 32.

Pour faciliter le dépliage éventuel de la patte 40 prolongeant ainsi le flasque 32 de la pièce de coin 26, la zone de pliage par laquelle cette patte 40 se relie à ce flasque 32 se réduit, dans la forme de réalisation représentée, à deux pontets 45, qui interviennent à distance l'un de l'autre, en étant en pratique chacun respectivement disposés le long des bords latéraux de la patte 40, et dont la largeur est une fraction de celle de cette patte 40.

Dans la forme de réalisation représentée, le flasque 32 de la pièce de coin 26 forme, au droit de la zone d'angle A' correspondante du cadre d'appui 16, et, plus précisément, au droit de la ligne de coupe 21 présente dans une telle zone d'angle A', un logement 46 ouvert vers ce cadre d'appui 16.

Par exemple, et tel que représenté, ce logement 46 résulte d'une simple déformation locale 47, en goulotte, du flasque 32.

Dans la forme de réalisation représentée, le montant 33 de la pièce de coin 26 comporte, successivement, à partir du flasque 32 associé, au moins deux pans 49, 50, à savoir, un pan latéral 49, qui s'étend sensiblement perpendiculairement au flasque 32, et un pan de façade 50, qui s'étend sensiblement parallèlement au flasque 32, à distance du cadre d'appui 16, du côté du pan latéral 49 opposé au flasque 32.

Ces deux pans 49, 50 s'étendent l'un et l'autre à compter du bord inférieur du flasque 32.

Le pan latéral 49 s'étend sur toute la hauteur du flasque 32.

Par contre, le pan de façade 50 s'étend sur une hauteur supérieure à celle de celui-ci.

Dans la forme de réalisation représentée, le montant 33 de la pièce de coin 26 comporte, suivant un profil en U, un deuxième pan latéral 49', qui s'étend parallèlement au premier pan latéral 49, de l'autre côté du pan de façade 50 par rapport à celui-ci.

Les moyens de support 20 propres à la fixation d'un quelconque équipement comportent au moins un perçage taraudé 52A, 52B, et celui-ci affecte le pan de façade 50 du montant 33.

Dans la forme de réalisation représentée, il y a deux perçages taraudés 52A, 52B échelonnés en hauteur sur le montant 33, le perçage taraudé 52A s'étendant par exemple dans la partie médiane du pan de façade 50 de ce montant 33 et le perçage taraudé 52B dans la partie supérieure 53 de ce pan de façade 50.

Préférentiellement, et tel que représenté, ces perçages taraudés 52A, 52B se prolongent chacun axialement à la faveur de soyages 54A, 54B, et ceux-ci font saillie sur la face arrière du pan de façade 50.

Dans la forme de réalisation représentée, la partie supérieure 53 du pan de façade 50 présentant le perçage taraudé 52A est partiellement isolée du reste de ce pan de façade 50 par une fente borgne 55, cette fente borgne 55 se prolonge en oblique sur le pan latéral 49', en débouchant dans la zone d'angle supérieure de celui-ci, et la portion 56 de ce pan latéral 49' ainsi isolée du reste de celui-ci par cette fente borgne 55 est décalée vers l'intérieur du montant 33, avec la portion correspondante de la partie supérieure 53 du pan de façade 50.

Dans la forme de réalisation représentée, et pour des raison qui apparaîtront ultérieurement, le pan de façade 50 du montant 33 de la pièce de coin 26 suivant l'invention présente, le long de son bord inférieur, dans la zone médiane de celui-ci, une échancrure 57 de contour sensiblement rectangulaire.

En outre, dans cette forme de réalisation, le deuxième pan latéral 49' de ce montant 33 présente, au raccordement de son bord inférieur et de son bord arrière, un bec 58, par lequel il est en prise avec le repli 22 raccordant le cadre d'appui 16 à la ceinture 11.

Enfin, dans la forme de réalisation représentée, la pièce de coin 26 suivant l'invention comporte, localement, en saillie, au moins une console 60, 60', 60"pour l'appui d'un quelconque équipement.

Par exemple, et tel que représenté, il y a trois consoles 60, 60', 60".

La console 60 s'étend de chant, et elle est constituée par la tranche d'un prolongement du pan de façade 50 du montant 33 formé à la faveur d'un ajour 62 du premier pan latéral 49 de ce montant 33.

La console 60' s'étend, elle, à plat, et elle est constituée en pleine surface par un retour en équerre du deuxième pan latéral 49' du montant 33 formé à la faveur d'un ajour 62' de ce deuxième pan latéral 49'.

Dans la forme de réalisation représentée, l'extension latérale de cette console 60' est accrue à la faveur d'un prolongement local 63 du deuxième pan latéral 49' formé lui-même à la faveur d'un ajour 64 du pan de façade 50.

La console 60" s'étend de chant, comme la console 60, et elle est constituée par la tranche du prolongement local 63 du deuxième pan latéral 49' du montant 33.

La console 60 s'étend en pratique à un niveau supérieur à celui auquel s'étend la console 60'.

Par exemple, la console 60 s'étend sensiblement dans la partie médiane du montant 33, tandis que la console 60' s'étend dans la partie inférieure de ce montant 33.

La console 60" s'étend, elle, au même niveau que la console 60.

En pratique, dans la forme de réalisation représentée, la pièce de coin 26 suivant l'invention est formée par pliage et découpe d'un flan métallique.

Dans la forme de réalisation représentée, le fond 18 présente, localement, dans chacune de ses zones d'angle A", un bossage 66, qui fait saillie vers l'extérieur, et qui est sensiblement à niveau avec le bord arrière 15 de la ceinture 11.

En pratique, ce bossage 66 résulte d'une simple déformation locale du fond 18.

Enfin, le trou 36 que le fond 18 présente également dans chacune de ses zones d'angle A" est préférentiellement obturé par un bouchon 67 amovible.

Pour l'assemblage de l'enveloppe 10 suivant l'invention il peut par exemple être procédé comme suit.

Dans un premier temps, le fond 18 est collé, de l'arrière, au cadre d'appui 16 de la ceinture 11, sur la face extérieure de ce cadre d'appui 16.

Dans un deuxième temps, une pièce de coin 26 est appliquée, de l'avant, sur le cadre d'appui 16, dans chacune des zones d'angle A de la ceinture 11, et, corollairement, un moyen de fixation 27 est amené, de l'arrière, en prise avec cette pièce de coin 26.

Le cadre d'appui 16 se trouve ainsi pris en sandwich entre la pièce de coin 26 et le fond 18, et le moyen de fixation 27 assure la solidarisation conjointe de l'ensemble.

Ce moyen de fixation 27 assure conjointement toute la continuité électrique entre les éléments qu'il traverse : en effet, il présente, sur la face inférieure de sa tête, des crans qui arrachent localement la peinture du fond 18, son fût arrache corollairement la peinture du cadre d'appui 16 en taraudant l'avant-trou 30 de celui-ci, et, par ce fût, il mord enfin dans l'avant-trou 29 de la pièce de coin 26.

Le logement 46 des pièces de coin 26 suivant l'invention forme par ailleurs avantageusement une réserve permettant un apport supplémentaire de colle au droit de la ligne de coupe 21 que comporte chacune des zones d'angle A' du cadre d'appui 16, au bénéfice de l'étanchéité au niveau de celle-ci.

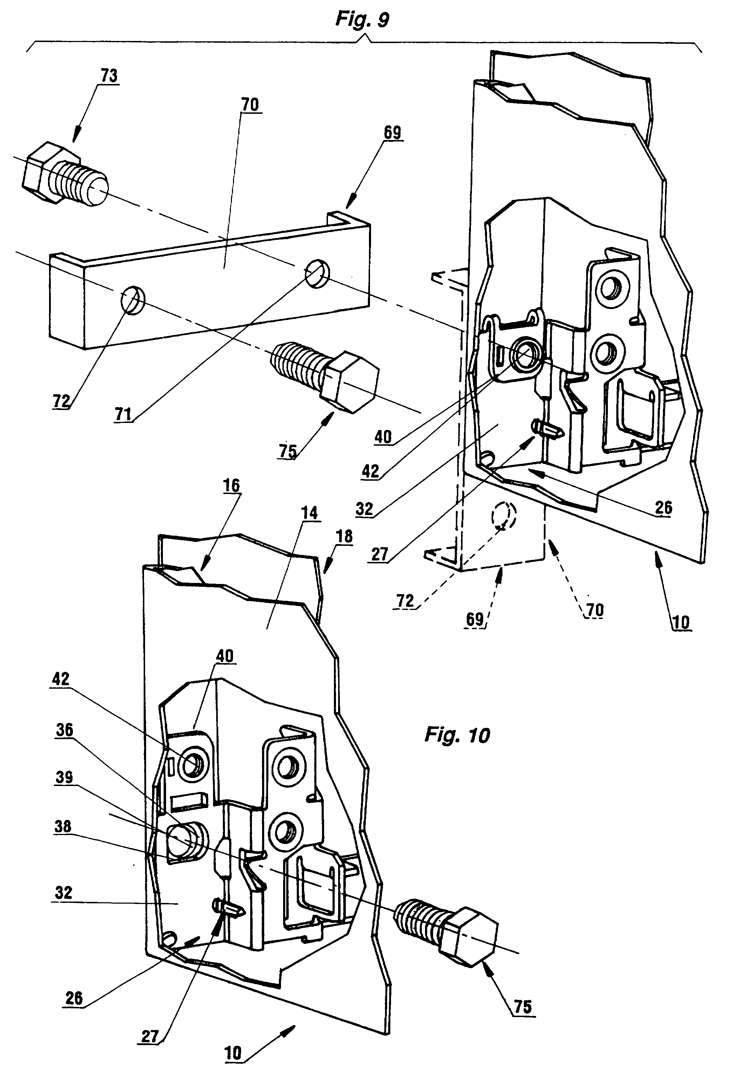

La fixation de l'enveloppe 10 suivant l'invention à un quelconque support peut se faire soit par l'intermédiaire de pattes de fixation 69, à raison d'une par zone d'angle A de la ceinture 11, tel que représenté sur la figure 9, soit directement, tel que représenté sur la figure 10.

Les pattes de fixation 69 nécessaires, dont une seule est visible sur la figure 9, sont, en pratique, toutes identiques entre elles.

Ces pattes de fixation 69 ne relevant pas de la présente invention, elles ont été supposées se réduire à un fer en U dont la partie médiane 70 présente, à distance l'un de l'autre, deux trous 71, 72.

Le trou 71 est utilisé pour le passage d'une vis 73, qui, intervenant de l'arrière, traverse, librement, et successivement, ce trou 71, le trou 36 du fond 18, après élimination du bouchon 67 obturant jusque-là celui-ci, le trou 39 du cadre d'appui 16, et l'évidement 38 du flasque 32 de la pièce de coin 26, avant de venir en prise avec le perçage taraudé 42 de la patte 40 prolongeant en U ce flasque 32.

Le trou 72 de la patte de fixation 69 est utilisé pour l'intervention, de l'avant, d'un tire-fond 75 assurant ensuite la fixation de l'ensemble au support concerné.

Tel que représenté en traits continus sur la figure 9, la patte de fixation 69 peut être disposée horizontalement.

Tel que schématisé en traits interrompus sur cette figure 9, elle peut également être disposée verticalement.

Lorsque l'enveloppe 10 est fixée directement au support concerné, la patte 40 prolongeant en U le flasque 32 de chacune des pièces de coin 26 suivant l'invention est dépliée, de manière à dégager l'évidement 38 que présente ce flasque 32, tel que représenté à la figure 10.

Il est possible d'agir pour ce faire sur cette patte 40 en introduisant un quelconque outil, par exemple la lame d'un tournevis, dans la boutonnière 44 qu'elle comporte, et en faisant ensuite levier sur elle.

Le trou 39 du cadre d'appui 16 et le trou 36 du fond 18 se trouvant ainsi dégagés, il suffit, ensuite, de mettre en oeuvre, de l'avant, le tire-fond 75.

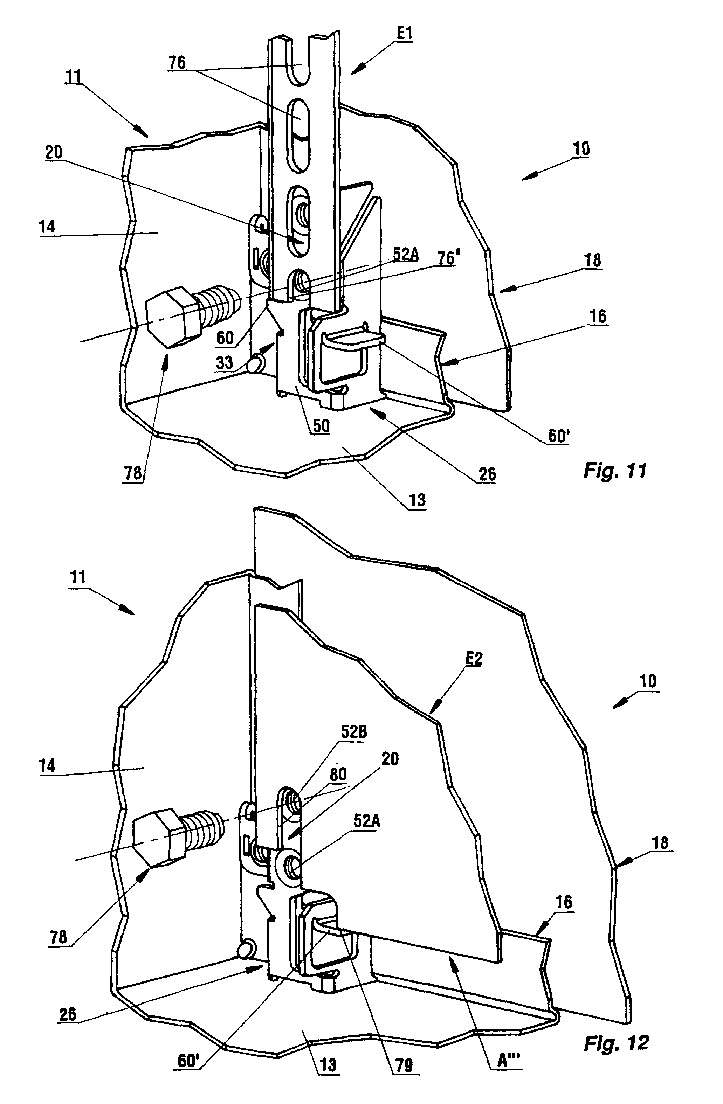

Lorsque, comme représenté sur la figure 11, l'équipement E1 à rapporter dans l'enveloppe 10, le long de chacune des parois latérales 14 de la ceinture 11, est un simple montant qui doit s'étendre de l'une à l'autre des pièces de coin 26 correspondantes, et qui, en forme de cornière, présente, échelonnées, de place en place, sur la hauteur de son aile de façade, des boutonnières 76, avec, à sa base, une demi-boutonnière 76' ouverte vers le bas, ce montant est amené en application, par son aile de façade, sur le pan de façade 50 du montant 33 de chacune des pièces de coin 26 concernées, tout en étant en appui, par son aile latérale, sur la console 60 de cette pièce de coin 26, et, les dispositions étant prévues à cet effet, la demi-boutonnière 76' de son aile de façade se trouve alors en regard du perçage taraudé 52A des moyens de support 20, en sorte qu'il suffit, ensuite, pour l'assujettir à une telle pièce de coin 26, de mettre en oeuvre une vis 78, qui, après traversée de la demi-boutonnière 76', vient en prise à vissage avec ce perçage taraudé 52A.

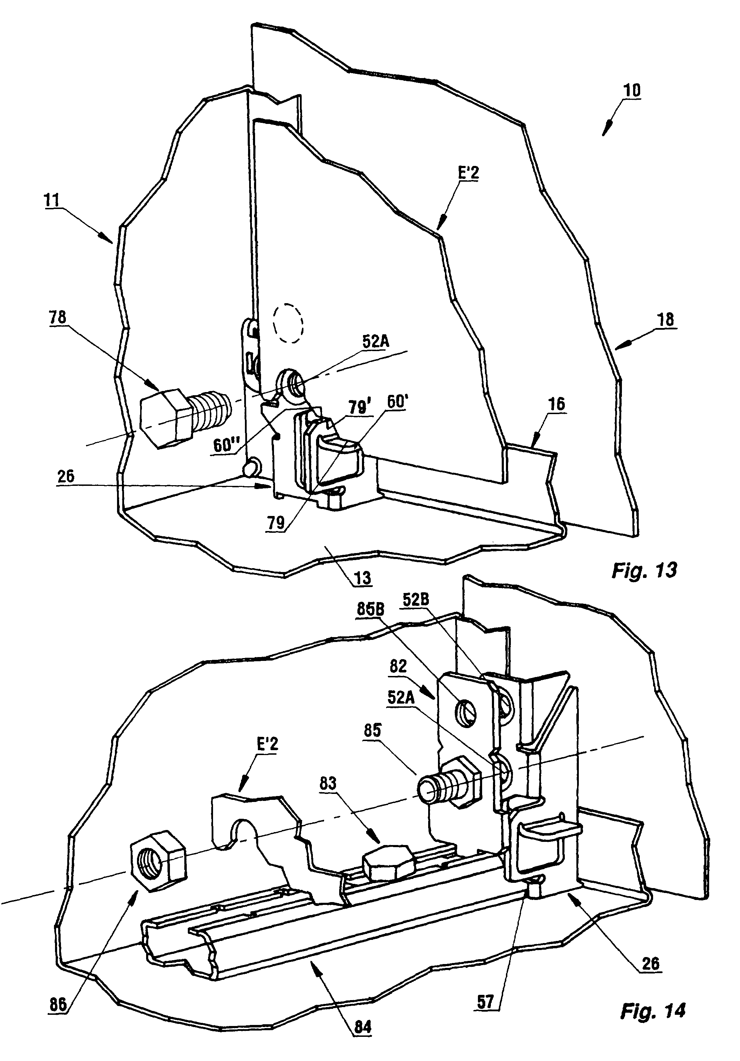

En variante, l'équipement E2 ou E'2 à rapporter dans l'enveloppe 10 peut être une plaque, qui, tel que représenté sur les figures 12 et 13, est à disposer parallèlement au fond 18, à distance de celui-ci, en étant fixée aux pièces de coin 26 dans chacune de ses zones d'angles A'''.

Dans chacune de ces zones d'angles A"', cette plaque comporte, d'une part, s'il s'agit d'un équipement E2, un épaulement 79, qui est directement formé par sa tranche, tel que représenté sur la figure 12, ou, s'il s'agit d'un équipement E'2, un épaulement 79', qui résulte d'un décrochement prévu à cet effet sur cette tranche, tel que représenté sur la figure 13, et par laquelle elle peut être amenée en appui, soit, dans le premier cas, sur la console 60' de la pièce de coin 26 correspondante, figure 12, soit, dans le deuxième cas, sur la console 60" de cette pièce de coin 26, figure 13, et, d'autre part, une échancrure 80, qui vient en correspondance avec le perçage taraudé 52B des moyens de support 20 que comporte une telle pièce de coin 26, lorsqu'il s'agit d'un équipement E2, figure 12, ou avec le perçage taraudé 52A de ces moyens de support 20, lorsqu'il s'agit d'un équipement E'2, figure 13.

Dans l'un et l'autre cas, une vis 78 permet, comme précédemment, l'assujettissement, à chacune des pièces de coin 26, de la plaque constituant un tel équipement E2.

Cette plaque peut être pleine, ou comporter, de manière connue en soi, un réseau de perforations, non représentées.

Ainsi qu'il est aisé de le comprendre, le deuxième pan latéral 49' que comporte le montant 33 de la pièce de coin 26 suivant l'invention permet avantageusement d'éviter que, lorsque, comme décrit ci-dessus, l'équipement à rapporter dans l'enveloppe 10 est un équipement E2 ou E'2 constituant une plaque, cette plaque ne soit malencontreusement insérée derrière le pan de façade 50 de ce montant 33.

Dans le mode de mise en oeuvre illustré par la figure 14, la fixation de la plaque constituant l'équipement E2 ou E'2 se fait, pour chacune des pièces de coin 26, par l'intermédiaire d'une équerre 82, qui, par une vis 83, est rapportée, et bloquée en position, sur une glissière 84, en un point donné de cette glissière 84, et qui, présente, échelonnés sur sa hauteur, au droit, chacun respectivement, des perçages taraudés 52A, 52B d'une telle pièce de coin 26, deux perçages taraudés dont un seul est visible sur la figure 14, en l'espèce un perçage taraudé 85B qui s'étend au droit du perçage taraudé 52B de la pièce de coin 26.

Suivant que la plaque concernée constitue un équipement E2 ou E'2, un goujon 85 est rapporté par vissage dans l'un ou l'autre de ces perçages taraudés, et un écrou 86 suffit ensuite pour assurer la fixation de cette plaque à l'équerre 82.

Par exemple, et tel que représenté, le goujon 85 est implanté dans le perçage taraudé de l'équerre 82 disposé en regard du perçage taraudé 52A de la pièce de coin 26, lorsque, comme en l'espèce, la plaque concernée constitue un équipement E'2.

Suivant l'invention, la glissière 84, qui s'étend parallèlement à l'arête de la zone d'angle A correspondante de la ceinture 11, présente, à son extrémité libre, du côté de la pièce de coin 26, une languette, non visible sur la figure 14, qui vient en prolongement de sa partie médiane, et par laquelle elle est insérée dans l'échancrure 57 de cette pièce de coin 26.

Cette glissière 84 se trouve ainsi avantageusement calée en position sur cette pièce de coin 26, tout en étant, de manière connue en soi, fixée, par ailleurs, sur la paroi concernée de la ceinture 11, à la faveur d'un goujon fileté prévu en saillie à cet effet sur cette paroi, et il s'agit, en l'espèce, soit de la paroi inférieure 13 de la ceinture 11, comme représenté, soit de sa paroi supérieure 12.

Bien entendu, la présente invention ne se limite pas à la forme de réalisation décrite et représentée, mais englobe toute variante d'exécution.

En particulier, dans une forme de réalisation simplifiée, les moyens de support prévus sur la pièce de coin suivant l'invention se réduisent à un seul perçage taraudé.

## Revendications

1. Enveloppe comportant, d'une part, une ceinture (11), qui forme sa paroi supérieure (12), sa paroi inférieure (13) et ses parois latérales (14), et dont est solidaire, le long de son bord arrière (15), un cadre d'appui (16), et, d'autre part, un fond (18) appliqué contre la face extérieure (19) du cadre d'appui (16), et des moyens de montage (20) d'un équipement à l'intérieur de l'enveloppe, l'enveloppe comportant de plus, à l'intèrieur de la ceinture (11), dans chacune des zones d'angle (A) de celle-ci, une pièce de coin (26), à laquelle le fond (18) se trouve assujetti par au moins un moyen de fixation (27) de telle sorte que le cadre d'appui (16) se trouve pris en sandwich entre le fond (18) et la pièce de coin (26), **caractérisée en ce que** la pièce de coin (26) comporte, par elle-même, les moyens de montage (20) propres à la fixation d'un équipement et distincts dudit moyen de fixation (27), et **en ce que** ledit moyen de fixation (27) est en prise directe avec le cadre d'appui (16) pour solidariser la pièce de coin (26) à la ceinture (11), **en ce que**, pour la fixation de l'ensemble à un quelconque support, il est prévu dans chacune desdites zones d'angle (A) au moins un perçage de fixation (35) qui traverse le fond (18) et la pièce de coin (26).

2. Enveloppe suivant la revendication 1, **caractérisée en ce que** le moyen de fixation (27) associé à la pièce de coin (26) intervient de l'arrière, et, après traversée du fond (18), il est en prise avec cette pièce de coin (26).

3. Enveloppe suivant la revendication 2, **caractérisée en ce que** le moyen de fixation (27) associé à la pièce de coin (26) est une vis autotaraudeuse qui traverse librement le fond (18).

4. Enveloppe suivant l'une quelconque des revendications 1 à 3, **caractérisée en ce que** le moyen de fixation (27) associé à la pièce de coin (26) traverse également le cadre d'appui (16).

5. Enveloppe suivant l'une quelconque des revendications 1 à 4, **caractérisée en ce que** la pièce de coin (26) comporte, côte à côte, d'une part, dans la zone d'angle (A) correspondante de la ceinture (11), un flasque (32), qui s'étend au plus près du cadre d'appui (16), et à la faveur duquel intervient le moyen de fixation (27) associé, et, d'autre part, sensiblement parallèlement à la paroi latérale (14) correspondante de la ceinture (11), un montant (33), qui fait saillie sur le cadre d'appui (16), et à la faveur duquel interviennent les moyens de support (20) propres à la fixation d'un équipement.

6. Enveloppe suivant la revendication 5, **caractérisé en ce que** le perçage de fixation (35) comporte, sur le fond (18), un trou (36), et, sur le flasque (32) de la pièce de coin (26), un évidement (38) établi au droit du trou (36) du fond (18).

7. Enveloppe suivant la revendication 6, **caractérisé en ce que** le perçage de fixation (35) fait aussi intervenir le cadre d'appui (16), ce perçage de fixation (35) comportant, sur ce cadre d'appui (16), un trou (39) établi au droit du trou (36) du fond (18).

8. Enveloppe suivant l'une quelconque des revendications 6, 7, **caractérisée en ce que** le flasque (32) de la pièce de coin (26) se prolonge par une patte (40), qui, repliée en U parallèlement à lui, présente, au droit de son évidement (38), un perçage taraudé (42).

9. Enveloppe suivant la revendication 8, **caractérisé en ce que** la zone de pliage par laquelle la patte (40) prolongeant le flasque (32) de la pièce de coin (26) se relie à ce flasque (32) se réduit à deux pontets (45), qui interviennent à distance l'un de l'autre, et dont la largeur est une fraction de celle de cette patte (40).

10. Enveloppe suivant l'une quelconque des revendications 6 à 9, **caractérisée en ce que** le trou (36) du fond (18) est obturé par un bouchon (67) amovible.

11. Enveloppe suivant l'une quelconque des revendications 5 à 10, **caractérisée en ce que** le flasque (32) de la pièce de coin (26) forme, au droit de la zone d'angle (A') correspondante du cadre d'appui (16), un logement (46) ouvert vers ce cadre d'appui (16).

12. Enveloppe suivant l'une quelconque des revendications 5 à 11, **caractérisée en ce que** le montant (33) de la pièce de coin (26) comporte, successivement, à partir du flasque (32) associé, au moins deux pans (49, 50), à savoir un pan latéral (49), qui s'étend sensiblement perpendiculairement au flasque (32), et un pan de façade (50), qui s'étend sensiblement parallèlement au flasque (32), du côté du pan latéral (49) opposé à ce flasque (32).

13. Enveloppe suivant la revendication 12, **caractérisée en ce que**, suivant un profil en U, le montant (33) de la pièce de coin (26) comporte un deuxième pan latéral (49'), qui s'étend parallèlement au premier pan latéral (49), de l'autre côté du pan de façade (50) par rapport à celui-ci.

14. Enveloppe suivant l'une quelconque des revendications 5 à 13, **caractérisée en ce que** les moyens de support (20) propres à la fixation d'un équipement comportent au moins un perçage taraudé (52A, 52B).

15. Enveloppe suivant les revendications 12 et 14, prises conjointement, **caractérisée en ce que** le perçage taraudé (52A, 52B) des moyens de support (20) affecte le pan de façade (50) du montant (33) de la pièce de coin (26).

16. Enveloppe suivant l'une quelconque des revendications 14, 15, **caractérisée en ce qu'**il y a deux perçages taraudés (52A, 52B) échelonnés en hauteur sur le montant (33) de la pièce de coin (26).

17. Enveloppe suivant l'une quelconque des revendications 1 à 16, **caractérisée en ce que** la pièce de coin (26) comporte, localement, en saillie, au moins une console (60, 60', 60") pour l'appui d'un équipement.

18. Enveloppe suivant l'une quelconque des revendications 1 à 17, **caractérisée en ce que** le cadre d'appui (16) s'étend en retrait par rapport au bord arrière (15) de la ceinture (11), et il se raccorde à celle-ci par un repli (22).

19. Enveloppe suivant la revendication 18, **caractérisée en ce que** le fond (18) présente, localement, dans chacune de ses zones d'angle (A"), un bossage (66), qui fait saillie vers l'extérieur, et qui est sensiblement à niveau avec le bord arrière (15) de la ceinture (11).

20. Enveloppe suivant les revendications 13 et 18, prises conjointement, **caractérisée en ce que** le deuxième pan latéral (49') du montant (33) de la pièce de coin (26) présente, au raccordement de son bord inférieur et de son bord arrière, un bec (58), par lequel il est en prise avec le repli (22) raccordant le cadre d'appui (16) à la ceinture (11).

21. Enveloppe suivant l'une quelconque des revendications 1 à 20, **caractérisée en ce que** le fond (18) est collé au cadre d'appui (16).

## Patentansprüche

1. Gehäuse, umfassend einerseits ein Seitenband (11), das seine obere Wand (12), seine untere Wand (13) und seine Seitenwände (14) bildet und mit dem längs seines hinteren Randes (15) ein Stützrahmen (16) fest verbunden ist, und andererseits einen an die Außenseite (19) des Stützrahmens (16) angelegten Boden (18) und Mittel (20) zur Montage einer Ausrüstung im Inneren des Gehäuses, wobei das Gehäuse außerdem im Inneren des Seitenbandes (11) in jeder seiner Eckenzonen (A) ein Eckteil (26) aufweist, an dem der Boden (18) durch mindestens ein Befestigungsmittel (27) so angebracht ist, dass der Stützrahmen (16) sandwichartig zwischen dem Boden (18) und dem Eckteil (26) ergriffen ist, **dadurch gekennzeichnet, dass** das Eckteil (26) durch sich selbst die Montagemittel (20) aufweist, die für die Befestigung einer Ausrüstung geeignet sind und von dem Befestigungsmittel (27) getrennt sind, dass das Befestigungsmittel (27) in direktem Eingriff mit dem Stützrahmen (16) ist, um das Eckteil (26) mit dem Seitenband (11) fest zu verbinden, und dass für die Befestigung der Einheit an einem beliebigen Träger in jeder der Eckenzonen (A) mindestens eine Befestigungsbohrung (35) vorgesehen ist, die den Boden (18) und das Eckteil (26) durchquert.

2. Gehäuse nach Anspruch 1, **dadurch gekennzeichnet, dass** das dem Eckteil (26) zugeordnete Befestigungsmittel (27) von hinten einwirkt und nach Durchquerung des Bodens (18) mit diesem Eckteil (26) in Eingriff steht.

3. Gehäuse nach Anspruch 2, **dadurch gekennzeichnet, dass** das dem Eckteil (26) zugeordnete Befestigungsmittel (27) eine selbstschneidende Schraube ist, die den Boden (18) frei durchquert.

4. Gehäuse nach einem der Ansprüche 1 bis 3, **dadurch gekennzeichnet, dass** das dem Eckteil (26) zugeordnete Befestigungsmittel (27) auch den Stützrahmen (16) durchquert.

5. Gehäuse nach einem der Ansprüche 1 bis 4, **dadurch gekennzeichnet, dass** das Eckteil (26) nebeneinander einerseits in der entsprechenden Eckenzone (A) des Seitenbandes (11) eine Wange (32), die sich möglichst nahe bei dem Stützrahmen (16) erstreckt und an welcher das zugeordnete Befestigungsmittel (27) angreift, und andererseits im wesentlichen parallel zu der entsprechenden Seitenwand (14) des Seitenbandes (11) eine Säule (33) aufweist, die am Stützrahmen (16) vorsteht und an welcher die für die Befestigung einer Ausrüstung geeigneten Tragmittel (20) vorgesehen sind.

6. Gehäuse nach Anspruch 5, **dadurch gekennzeichnet, dass** die Befestigungsbohrung (35) auf dem Boden (18) ein Loch (36) und auf der Wange (32) des Eckteils (26) eine Aussparung (38) umfasst, die auf Höhe des Lochs (36) des Bodens (18) angeordnet ist.

7. Gehäuse nach Anspruch 6, **dadurch gekennzeichnet, dass** die Befestigungsbohrung (35) auch den Stützrahmen (16) betrifft, wobei diese Befestigungsbohrung (35) auf dem Stützrahmen (16) ein Loch (39) umfasst, das auf Höhe des Lochs (36) des Bodens (18) angeordnet ist.

8. Gehäuse nach einem der Ansprüche 6, 7, **dadurch gekennzeichnet, dass** die Wange (32) des Eckteils (26) durch einen Lappen (40) verlängert ist, der parallel zu sich selbst U-förmig umgebogen ist und auf Höhe seiner Aussparung (38) eine Gewindebohrung (42) aufweist.

9. Gehäuse nach Anspruch 8, **dadurch gekennzeichnet, dass** der Biegungsbereich, über den der die Wange (32) des Eckteils (26) verlängernde Lappen (40) mit dieser Wange (32) verbunden ist, auf zwei Stege (45) reduziert ist, die in einem Abstand voneinander angeordnet sind und deren Breite ein Bruchteil der dieses Lappens (40) ist.

10. Gehäuse nach einem der Ansprüche 6 bis 9, **dadurch gekennzeichnet, dass** das Loch (36) des Bodens (18) durch einen abnehmbaren Stopfen (67) verschlossen ist.

11. Gehäuse nach einem der Ansprüche 5 bis 10, **dadurch gekennzeichnet, dass** die Wange (32) des Eckteils (26) auf Höhe der entsprechenden Eckenzone (A') des Stützrahmens (16) eine auf den Stützrahmen (16) zu offene Aufnahme (46) bildet.

12. Gehäuse nach einem der Ansprüche 5 bis 11, **dadurch gekennzeichnet, dass** die Säule (33) des Eckteils (26) von der zugeordneten Wange (32) an nacheinander mindestens zwei Schenkel (49,50) aufweist, und zwar einen Seitenschenkel (49), der sich im wesentlichen senkrecht zu der Wange (32) erstreckt, und einen Frontschenkel (50), der sich im wesentlichen parallel zu der Wange (32) auf der dieser Wange (32) entgegengesetzten Seite des Seitenschenkels (49) erstreckt.

13. Gehäuse nach Anspruch 12, **dadurch gekennzeichnet, dass** die Säule (33) des Eckteils (26) gemäß einem U-Profil einen zweiten Seitenschenkel (49') aufweist, der sich parallel zu dem ersten Seitenschenkel (49) und bezüglich diesem auf der anderen Seite des Frontschenkels (50) erstreckt.

14. Gehäuse nach einem der Ansprüche 5 bis 13, **dadurch gekennzeichnet, dass** die Tragmittel (20) für die Befestigung einer Ausrüstung mindestens eine Gewindebohrung (52A,52B) umfassen.

15. Gehäuse nach den Ansprüchen 12 und 14 zusammen, **dadurch gekennzeichnet, dass** die Gewindebohrung (52A,52B) der'Tragmittel (20) in dem Frontschenkel (50) der Säule (33) des Eckteils (26) vorgesehen sind.

16. Gehäuse nach einem der Ansprüche 14, 15, **dadurch gekennzeichnet, dass** zwei Gewindebohrungen (52A,52B) vorgesehen sind, die auf der Säule (33) des Eckteils (26) in der Höhe gestaffelt sind.

17. Gehäuse nach einem der Ansprüche 1 bis 16, **dadurch gekennzeichnet, dass** das Eckteil (26) örtlich vorstehend mindestens eine Konsole (60,60',60") für die Auflage einer Ausrüstung aufweist.

18. Gehäuse nach einem der Ansprüche 1 bis 17, **dadurch gekennzeichnet, dass** der Stützrahmen (16) sich bezüglich des hinteren Rands (15) des Seitenbands (11) zurückversetzt erstreckt und mit diesem durch einen Falz (22) verbunden ist.

19. Gehäuse nach Anspruch 18, **dadurch gekennzeichnet, dass** der Boden (18) in jeder seiner Eckenzonen (A") örtlich eine Erhebung (66) aufweist, die nach außen vorsteht und die im wesentlichen mit dem hinteren Rand (15) des Seitenbands (11) bündig ist.

20. Gehäuse nach den Ansprüchen 13 und 18 zusammen, **dadurch gekennzeichnet, dass** der zweite Seitenschenkel (49') der Säule (33) des Eckteils (26) an der Verbindung seines unteren Randes mit seinem hinteren Rand eine Nase (58) aufweist, mit der er mit dem den Stützrahmen (16) mit dem Seitenband (11) verbindenden Falz (22) in Eingriff steht.

21. Gehäuse nach einem der Ansprüche 1 bis 20, **dadurch gekennzeichnet, dass** der Boden (18) mit dem Stützrahmen (16) verklebt ist.

## Claims

1. A housing comprising on the one hand an encircling portion (11) which forms its upper wall (12), its lower wall (13) and its side walls (14) and with respect to which there is fixed, along its rear edge (15), a support frame (16) and, on the other hand, a back (18) applied against the external face (19) of the support frame (16), and mounting means (20) for mounting an item of equipment in the interior of the housing, the housing further comprising in the interior of the encircling portion (11) in each of the angle zones (A) thereof a corner piece (26) to which the back (18) is secured by at least one fixing means (27) in such a way that the support frame (16) is sandwiched between the back (18) and the corner piece (26), **characterised in that** the corner piece (26) comprises in itself the mounting means (20) which are suitable for fixing an item of equipment and which are separate from said fixing means (27), that said fixing means (27) is directly engaged with the support frame (16) to secure the corner piece (26) to the encircling portion (11), and that, for fixing the assembly to any support, provided in each of said angle zones (A) is at least one fixing opening (35) which passes through the back (18) and the corner piece (26).

2. A housing according to claim 1 **characterised in that** the fixing means (27) associated with the comer piece (26) is operative from the rear and after passing through the back (18) it is in engagement with said corner piece (26).

3. A housing according to claim 2 **characterised in that** the fixing means (27) associated with the corner piece (26) is a self-tapping screw which passes freely through the back (18).

4. A housing according to any one of claims 1 to 3 **characterised in that** the fixing means (27) associated with the corner piece (26) also passes through the support frame (16).

5. A housing according to any one of claims 1 to 4 **characterised in that** the corner piece (26) comprises side-by-side on the one hand in the corresponding angle zone (A) of the encircling portion (11) a side plate portion (32) which extends closest to the support frame (16) and by way of which the associated fixing means (27) is operative and, on the other hand, substantially parallel to the corresponding side wall (14) of the encircling portion (11), an upright (33) which is in projecting relationship with the support frame (16) and by way of which the support means (20) for fixing an item of equipment are operative.

6. A housing according to claim 5 **characterised in that** the fixing opening (35) comprises on the back (18) a hole (36) and on the side plate portion (32) of the corner piece (26) an aperture (38) in line with the hole (36) in the back (18).

7. A housing according to claim 6 **characterised in that** the fixing opening (35) also involves the support frame (16), said fixing opening (35) comprising on said support frame (16) a hole (39) in line with the hole (36) in the back (18).

8. A housing according to either one of claims 6 and 7 **characterised in that** the side plate portion (32) of the corner piece (26) is prolonged by a lug (40) which, bent over in a U-shape in parallel relationship with itself, has a screwthreaded opening (42) in line with its aperture (38).

9. A housing according to claim 8 **characterised in that** the bending zone by way of which the lug (40) which prolongs the side plate portion (32) of the corner piece (26) is connected to said side plate portion (32) is reduced to two bridge portions (45) which are disposed at a spacing from each other and the width of which is a fraction of the width of said lug (40).

10. A housing according to any one of claims 6 to 9 **characterised in that** the hole (36) in the back (18) is closed by a removable plug (67).

11. A housing according to any one of claims 5 to 10 **characterised in that** the side plate portion (32) of the corner piece (26), in line with the corresponding angle zone (A') of the support frame (16), forms a housing (46) which is open towards the support frame (16).

12. A housing according to any one of claims 5 to 11 **characterised in that** the upright (33) of the corner piece (26) comprises successively, from the associated side plate portion (32), at least two surface portions (49, 50), namely a lateral surface portion (49) which extends substantially perpendicularly to the side plate portion (32) and a facade surface portion (50) which extends substantially parallel to the side plate portion (32) on the side of the lateral surface portion (49) which is opposite to said side plate portion (32).

13. A housing according to claim 12 **characterised in that**, in accordance with a U-shaped profile, the upright (33) of the corner piece (26) comprises a second lateral surface portion (49') which extends parallel to the first lateral surface portion (49) on the other side of the facade surface portion (50) with respect thereto.

14. A housing according to any one of claims 5 to 13 **characterised in that** the support means (20) for fixing an item of equipment comprises at least one screwthreaded opening (52A, 52B).

15. A housing according to claims 12 and 14 in combination **characterised in that** the screwthreaded opening (52A, 52B) of the support means (20) involves the facade surface portion (50) of the upright (33) of the corner piece (26).

16. A housing according to either one of claims 14 and 15 **characterised in that** there are two screwthreaded openings (52A, 52B) which are offset in respect of height on the upright (33) of the corner piece (26).

17. A housing according to any one of claims 1 to 16 **characterised in that** the corner piece (26) locally comprises in projecting relationship at least one bracket (60, 60', 60") for supporting an item of equipment.

18. A housing according to any one of claims 1 to 17 **characterised in that** the support frame (16) extends in set-back relationship with the rear edge (15) of the encircling portion (11) and it is connected thereto by a bend portion (22).

19. A housing according to claim 18 **characterised in that** the back (18) locally has in each of its angle zones (A") a boss (66) which projects outwardly and which is substantially flush with the rear edge (15) of the encircling portion (11).

20. A housing according to claims 13 and 18 in combination **characterised in that** the second lateral surface portion (49') of the upright (33) of the corner piece (26), at the connection of its lower edge and its rear edge, has a beak (58), by way of which it is in engagement with the bend portion (22) connecting the support frame (16) to the encircling portion (11).

21. A housing according to any one of claims 1 to 20 **characterised in that** the back (18) is glued to the support frame (16).
